# EUROPEAN PATENT SPECIFICATION

(11) **EP 2 490 378 B1**
(45) Date of publication and mention of the grant of the patent: **09.07.2014**
(21) Application number: 11154982.0
(22) Date of filing: 18.02.2011
(51) Int. Cl.: H04L 5/00, H04B 7/02, H04W 48/18, H04W 72/04, H04L 12/911

(54) **Apparatus and method for determining a control unit using feasibility requests and feasibility responses**
Vorrichtung und Verfahren zur Bestimmung einer Steuerungseinheit mittels Durchführbarkeitsanfrage und Durchführbarkeitsantworten
Appareil et procédé permettant de déterminer une unité de contrôle à l'aide de requêtes de faisabilité et réponses de faisabilité

(43) Date of publication of application: 22.08.2012
(73) Proprietor: NTT DoCoMo, Inc., Chiyoda-ku Tokyo 100-6150 (JP)
(72) Inventor: Scalia, Luca, 81371, München (DE); Biermann, Thorsten, 85764, Oberschleißheim (DE); Choi, Changsoon, 80665, München (DE)
(74) Representative: Zinkler, Franz

(56) References cited:
- WO-A2-2010/025286
- QUALCOMM EUROPE: "Coordinated Multi-Point downlink transmission in LTE-Advanced", 3GPP DRAFT; R1-084400 COMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081105, 5 November 2008 (2008-11-05), XP050317663, [retrieved on 2008-11-05]
- NORTEL: "Updates on Cell Clustering for CoMP Transmission/Reception", 3GPP DRAFT; R1-091919(NORTEL-CLUSTERING_FOR_COMP), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050339406, [retrieved on 2009-04-28]
- RALF IRMER ET AL: "Coordinated multipoint: Concepts, performance, and field trial results", IEEE COMMUNICATIONS MAGAZINE, vol. 49, no. 2, 1 February 2011 (2011-02-01), pages 102-111, XP55003502, ISSN: 0163-6804, DOI: 10.1109/MCOM.2011.5706317
- Luca Scalia ET AL: "Power-Efficient Mobile Backhaul Design for CoMP Support in Future Wireless Access Systems", Green Communications Workshop, IEEE Infocom 2011, Shanghai, China, 15 April 2011 (2011-04-15), pages 253-258, XP55003510, DOI: 10.1109/INFCOMW.2011.5928819 ISBN: 978-1-45-770249-5 Retrieved from the Internet: URL:http://ieeexplore.ieee.org/ielx5/58886 75/5928760/05928819.pdf?tp=&arnumber=59288 19&isnumber=5928760 [retrieved on 2011-07-25]

## Description

Embodiments according to the invention relate to wireless communication systems and particularly to an apparatus and a method for determining a core network configuration of a wireless communication system.

Cooperation in cellular mobile access networks shows high benefits in terms of wireless transmission capacity, inter-cell interference management, and energy consumption. Several techniques have been proposed so far (joint precoding and decoding, inter-cell coordination, etc.), each of them improving different performance merits.

There has been a lot of research in the area of implementing and evaluating the performance of different cooperation techniques, like joint signal processing ("V. Jungnickel, L. Thiele, T. Wirth, T. Haustein, S. Schiffermüller, A. Forck, S. Wahls, S. Jaeckel, S. Schubert, H. Gäbler, and Others, 'Coordinated multipoint trials in the downlink,' in Proc. IEEE Broadband Wireless Access Workshop (BWAWS), Nov. 2009"; "V. Jungnickel, M. Schellmann, L. Thiele, T.Wirth, T. Haustein, O. Koch, W. Zirwas, and E. Schulz, 'Interference-aware scheduling in the multiuser MIMO-OFDM downlink,' IEEE Communications Magazine, vol. 47, no. 6, pp. 56-66, June 2009"; and "S. Venkatesan, H. Huang, A. Lozano, and R. Valenzuela, 'A WiMAX based implementation of network MIMO for indoor wireless systems,' EURASIP Journal on Advances in Signal Processing, 2009") and inter-cell coordination ("W. Choi and J. G. Andrews, 'The capacity gain from intercell scheduling in multi-antenna systems,' IEEE Transactions on Wireless Communications, vol. 7, no. 2, pp. 714-725, Feb. 2008", "J. G. Andrews, A. Ghosh, and R. W. Heath, 'Networked MIMO with clustered linear precoding,' IEEE Transactions on Wireless Communications, vol. 8, no. 4, pp. 1910-1921, Apr. 2009"), from the wireless point of view. The results show how to integrate the cooperation techniques into the wireless systems and demonstrate the possible performance gains. Other work covers the aspects of how to synchronize the components involved in the cooperation schemes ("V. Jungnickel, T. Wirth, M. Schellmann, T. Haustein, and W. Zirwas, 'Synchronization of cooperative base stations,' in Proc. IEEE Int. Symp. on Wireless Communication Systems (ISWCS), 2008, pp. 329-334"), how many Base Stations (BSs) need to cooperate to achieve the desired gains ("J. Hoydis, M. Kobayashi, and M. Debbah, 'On the optimal number of cooperative base stations in network MIMO systems,' Arxiv preprint arXiv:1003.0332, 2010"), how to deal with inter-cluster interference ("G. Caire, S. A. Ramprashad, and H. C. Papadopoulos, 'Rethinking network MIMO: Cost of CSIT, performance analysis, and architecture comparisons,' in Proc. IEEE Information Theory and Applications Workshop (ITA), Jan. 2010"), e.g., by introducing overlapping cluster configurations, and how to efficiently collect Channel State Information (CSI) ("L. Thiele, M. Schellmann, S. Schiffermuller, V. Jungnickel, and W. Zirwas, 'Multi-cell channel estimation using virtual pilots,' in Proc. IEEE Vehicular Technology Conference (VTC), May 2008, pp. 1211-1215").

A further example is shown in "G. Caire, S.A. Ramprashad, H.C. Papadopoulos, C. Pepin, and C.E. Sundberg, 'Multiuser MIMO Downlink with Limited Inter-Cell Cooperation: Approximate Interference Alignment in Time, Frequency and Space,' Communication, Control, and Computing, 2008 46th Annual Allerton Conference on, 2008, p. 730-737".

An example of a configuration of a cooperative cellular network comprises multiple base stations (BS) in a cluster that jointly serves a user. Future cooperative networks will have much stricter requirements, since new cooperation techniques (e.g. CoMP, coordinated multipoint transmission, NW-MIMO, network multiple input multiple output) and higher base station density (more cluster candidates) may be available as well as higher user data rates may be required. Therefore, also much higher requirements towards the wireline network may be necessary. Consequently, the assumption that all clusters are feasible may not be true anymore. For a cooperative transmission, channel state information (CSI) is gathered for identifying the cooperative base station cluster. The cluster computation is done based on this channel state information. This may be useless, because the cluster will not be feasible. Therefore, consequences of infeasible clusters may be a waste of computational resources and capacity for signaling.

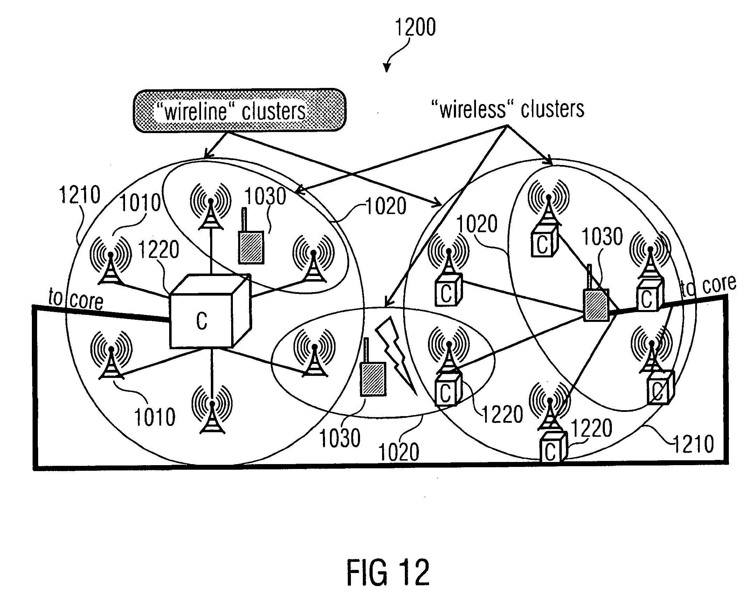

Fig. 12 shows a wireless communication system 1200 with some wireline clusters 1210 and some wireless clusters 1020. A wireline cluster 1210 may be controlled by a central control unit 1220 or some spreaded control units 1220. As it is shown, a wireless cluster 1020 cannot span over multiple wireline clusters 1210.

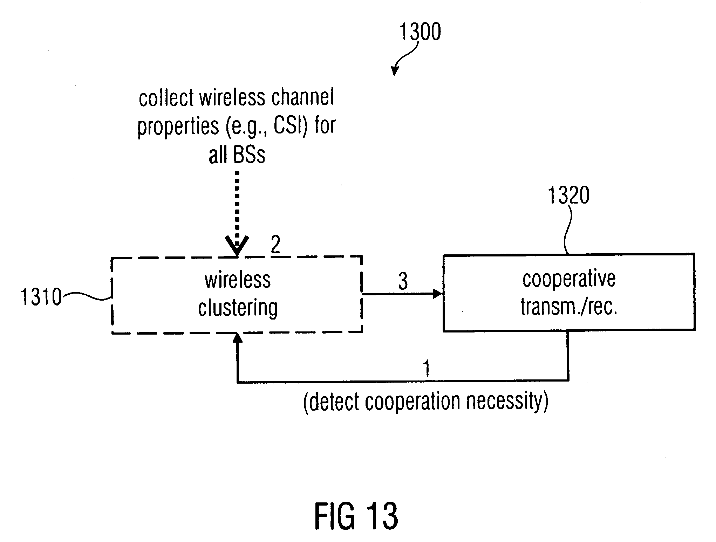

If a cooperation necessity is detected in such a wireless communication system, a wireless clustering 1310 is performed based on collected wireless channel properties (e.g. channel state information) for all base stations, as it is indicated in the example 1300 shown in Fig. 13. With this clustering a cooperative transmission or reception 1320 should be performed, although some wireless clusters may not be feasible due to limitations of the wireline core network. Fig. 12 illustrates this relation between the wireline and wireless clusters.

The achieved gain by applying wireless cooperation techniques like coordinated multi-point transmission (CoMP) or coordinated scheduling in cellular mobile access networks depends on the condition of the wireless channels between the base stations (BSs) and the user terminals (Uts). Depending on these channel properties, clusters of BS cells are selected to perform the cooperation.

Besides the wireless properties, properties of the wireline backhaul and core network, like the link delay, capacity and load has to be taken into account, when deciding how to set up the cooperating cell clusters, too. This is caused by the required exchange of control and user data traffic within cooperating cell sets as this data is transferred via the backhaul and core network. The data rate of this traffic will exceed the targeted capacity of 1 Gbit/s per BS of future backhaul networks, i.e., congestion scenarios that limit the wireless cooperation are likely to occur.

WO 2010/025286 A2 discloses a distributed downlink coordinated multipoint (CoMP) framework. Systems and methodologies are described that facilitate dynamically forming clusters in a wireless communication environment. A set of non-overlapping clusters can be formed dynamically over time and in a distributed manner. Each of the clusters can include a set of base stations and a set of mobile devices. The clusters can be yielded based upon a set of local strategies selected by base stations across the network converged upon through message passing. For example, each base station can select a particular local strategy as a function of time based upon a network-wide utility estimate respectively conditions upon implementation of the particular local strategy and disparate possible local strategies that can cover the corresponding base station. Moreover, operation within each of the clusters can be coordinated.

It is an object of the present invention to provide an improved concept for determining a control unit of a plurality of control units in a wireless communication system in order to improve the data throughput while keeping complexity low and keeping compatibility with existing network scenarios.

This object is achieved by an apparatus in accordance with claim 1, a wireless communication system in accordance with claim 10, a method for determining a control unit in accordance with claim 11 or a computer program product in accordance with claim 12.

A single control unit such as a CoMP controller at a specific base station is in charge of two fundamental functions. The first function is to process and distribute the signal necessary for the cooperation scheme to all the cooperating base stations that are part of a wireless cluster. The second function is to collect (uplink) to a distribute (downlink) user data from/to all the cooperating base stations that are part of the wireless cluster. An exemplary scenario is that such a control unit or CoMP controller is located at each base station location, although such a controller could also be located between two base stations in order to serve more than one base station.

Typically, the set of cooperating base stations might be smaller than the desired one due to the current backhaul latency and capacity status. Base stations whose backhaul networks do not allow for joining the wireless cluster will be excluded from the cooperating set.

In order to improve the wireless cluster feasibility performance, a cluster feasibility processor configured to receive a cluster feasibility response from at least one other control unit than a control unit actually controlling a base station serving a wireless device is provided, where the cluster feasibility response contains information of a feasible wireline cluster of base stations controllable by the at least one other control unit. Furthermore, a control unit selector is provided which is configured to select the at least one control unit for controlling a cooperative transmission between the at least two base stations and the wireless device based on the received information of the feasible wireline cluster of base stations controllable by the other control unit.

Hence, the present invention is flexible, since depending on the actual status of the wireline situation, i.e., particularly the wireline cluster situation, a control unit for controlling the cooperative transmission to a wireless device can be changed for one control unit located at one base station to a different control unit located at a different base station during operation. No hardware system modifications at the base stations or the control units or the backhaul network are required. Instead, the controller for controlling the cooperative transmission to a certain wireless device is flexibly determined due to the cluster feasibility request and the received cluster feasibility response messages, and it has been found out that significant throughput in an enhancement can be obtained due to the fact that a control unit (cluster controller located at a different base station) has a different wireline/backhaul condition.

In embodiments the wireless cluster feasibility is defined as the percentage of the base stations that are effectively part of the wireless cluster compared to all those which were originally selected to be part of it. Clearly, a reduced wireless cluster might not provide the gains expectable from CoMP.

In order to improve the wireless cluster feasibility performance, the present invention allows for dynamically selecting the most appropriate location for the CoMP controller. The reason is that the location of the CoMP controller has an impact on the overall data collection and distribution process that is required by the adopted CoMP scheme. Hence, moving the wireless cluster controller (control unit) to another location, such as one co-located at another base station has an impact on the cooperative cluster feasibility. This is due to the fact that a smaller number of hops over the wireline network is then required to reach the cooperating base stations, thus improving the wireless cluster feasibility performance.

Hence, the present invention addresses the problem of reduced cluster size resulting in a degraded user throughput. Instead of upgrading the backhaul by expensive hardware installations in the field, the present invention dynamically selects the wireless cluster controller which achieves the biggest wireline cluster by calculating the feasible wireline cluster for each controller in the desired wireless cluster, by selecting the controller whose corresponding wireline cluster covers the biggest part of the desired wireline cluster, and by handing over the control of the user terminal towards the selected wireless cluster controller in a preferred embodiment.

Therefore, many user equipments see a large cluster size improvement up to the doubled size, and this improvement is free. This means, by having larger clusters, i.e., by having more base stations serving one and the same wireless device, the data throughput is enhanced when a certain bit error rate is required or, alternatively, the data throughput is maintained, but due to the larger number of base stations, a much better bit error rate performance is obtained.

Preferred embodiments are subsequently discussed with respect to the accompanying drawings, in which.
- Fig. 1: is a block diagram of an apparatus for determining a core network configuration of a wireless communication system;
- Fig. 2a: is a block diagram of an apparatus for determining a core network configuration of a wireless communication system;
- Fig. 2b: is a schematic illustration of a wireless communication system;
- Fig. 3: is a schematic illustration of a wireline clustering and a wireless clustering triggered by a detected cooperation necessity;
- Fig. 4: illustrates a block diagram of an apparatus for determining a control unit of a plurality of control units in accordance with an embodiment of the present invention;
- Fig. 5: illustrates a flow chart of process steps to be performed for dynamically selecting the best controlled unit for a cooperative transmission or a cooperative reception;
- Fig. 6: illustrates an overview over a certain embodiment;
- Fig. 7: illustrates a block diagram of a further preferred embodiment;
- Fig. 8: illustrates simulation results showing large improvements due to the inventive process;
- Fig. 9: illustrates a further simulation result showing large improvements due to the inventive process;
- Fig. 10: illustrates a cooperative multipoint transmission scenario;
- Fig. 11: illustrates problems due to the backhaul/wireline situation;
- Fig. 12: illustrates a wireless communication system having wireline and wireless clusters; and
- Fig. 13: illustrates a known method for cooperative transmission or cooperative reception.

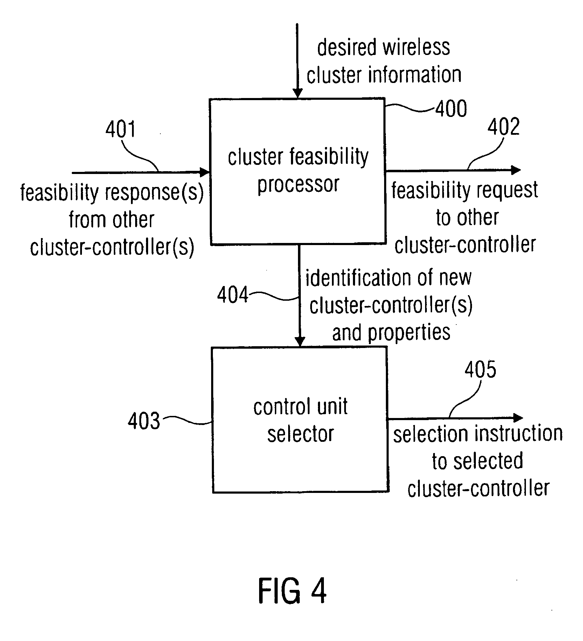

Fig. 4 illustrates a block diagram of an apparatus for determining a control unit of a plurality of control units in a wireless communication system for controlling a cooperative transmission or a cooperative reception between base stations and a wireless device, wherein the wireless communication system comprises a wireline or network with a plurality of control units and a plurality of base stations, wherein each control unit is able to control one or more base stations.

The apparatus comprises a cluster feasibility processor 400 configured to receive a cluster feasibility response 401 from at least one other control unit than a control unit controlling a base station actually serving a wireless device. The cluster feasibility response contains information of a feasible wireline cluster of base stations controllable by the at least one other control unit sending the feasibility response. Preferably, the other control unit addressed by the cluster feasibility request 400 reacts to the feasibility requests 402 sent by the apparatus for determining two different cluster-controllers.

The cluster feasibility processor 400 cooperates with a control unit selector 403. The control unit selector 403 is configured to select the at least one new control unit for controlling a cooperative transmission or a cooperative reception between at least two base stations and the wireless device based on the at least one information preferably comprising an identification 404 of the new cluster controller. The cluster controller or control unit then establishes a feasible wireline cluster of base stations controllable by this other (new) control unit and in order to trigger this, the control unit selector 403 preferably outputs a selection instruction 405 to the selected cluster controller/control unit indicated at 405.

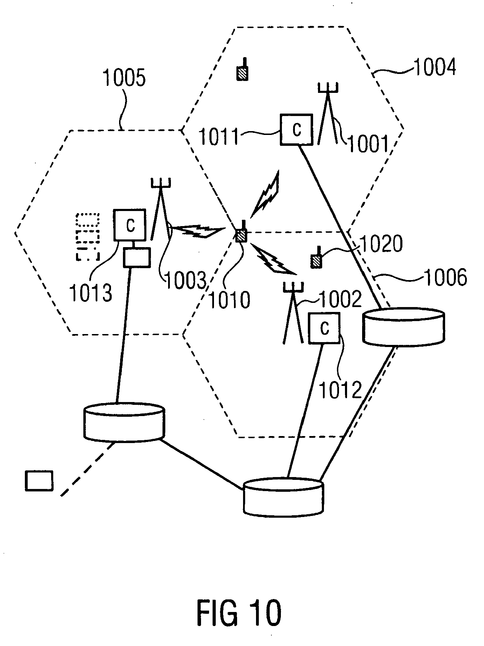

Fig. 10 illustrates a scenario having three different base stations 1001, 1002, 1003 located at different geographical positions and serving different areas 1004, 1005, 1006. A wireless device 1010 is located within this wireless communication system and has a wireless connection chance, i.e. an acceptable wireless channel to all three base stations 1001, 1002, 1003.

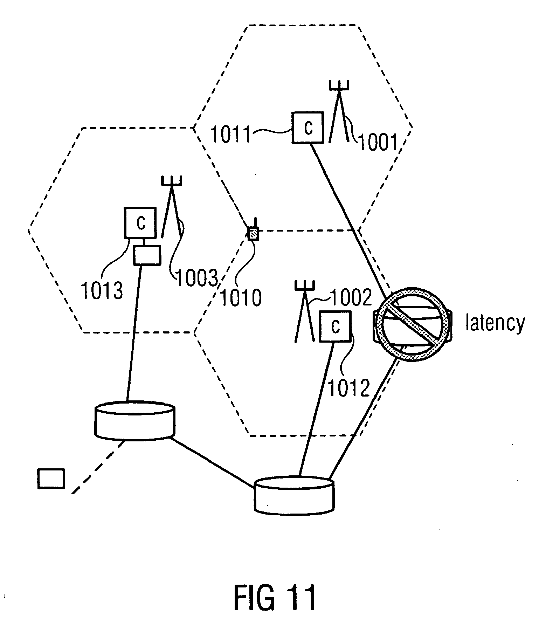

Furthermore, a control unit C 1011, 1012, 1013 is associated with each base station, i.e., is co-located with each base station. The three base stations can perform CoMP (joint processing) using one active controller per cluster performing the processing for this cluster. In the situation illustrated in Fig. 10, the controller 1013, co-located with base station 1003, has the actual control over the communication to the mobile device 1010 and could set up a cluster using the other two base stations 1001, 1002. However, as illustrated in Fig. 11, the CoMP control unit at base station 1003 cannot distribute data to all the desired base stations because of latency or capacitance issues on certain links. Reaching the topmost base station 1001, for example, requires traversing multiple hops, thus introducing latency. Eventually, the capacity might also limit the reach of the backhaul cluster. For example, two different unicast flows might not be able to traverse the same link.

However, now moving the wireless cluster controller into the control device 1012, co-located with the base station 1002 will have an impact on the cooperative cluster feasibility. This effect is illustrated, when it is considered that the control is moved to the controller 1012 and the controller 1012 now has a reduced hop size in order to provide the information to the base station 1001. On the other hand, the hop size to provide information to the base station 1003 has increased, but this does not cause a problem since the latency introduced by this additional hop, since it is only a single hop, is tolerable in the Fig. 10, Fig. 11 example.

Hence, the present invention addresses the problem that candidate base stations for a CoMP cluster might not be supported because of limited backhaul network capabilities and the problem of a reduced cluster size resulting in a degraded user throughput by dynamically placing the control unit for a wireline cluster from a serving base station to a different base station, which can provide a better (larger - with more base stations) wireline cluster for a cooperative transmission and/or cooperative reception.

Hence, the present invention provides a pre-calculation of the feasible wireless clusters at each wireless cluster controller that is co-located with a base station of the desired wireless cluster in response to a feasibility request 402 of Fig. 4 sent out by the cluster feasibility processor, and based on the result obtained by the feasibility response 401 from each cluster-controller, the highest wireless cluster feasibility can be selected by the control unit selector, and hand over to this wireless cluster controller in order to organize that the multipoint transmission can be performed. However, this handover does not necessarily have to be a real handover so that the mobile device 1010 is actually linked to the different base station having the cluster controller. Instead, the mobile device still can be linked to the earlier base stations controller 1013, but the base station controller 1012 actually controls the wireline cluster. Hence, the present invention also allows that the base station controller to which the mobile device is actually linked can be different from the controller organizing the wireline cluster.

Furthermore, the wireline cluster providing optimum throughput can be different for each wireless device therefore, the control unit for controlling the cooperative transmission also can be different for each wireless device. Therefore, when, for example, Fig. 10 is considered , mobile device 1020 could have the controller 1011 associated with the upper base station 1001 as the optimum controller while controller 1012 is the optimum controller for mobile device 1010.

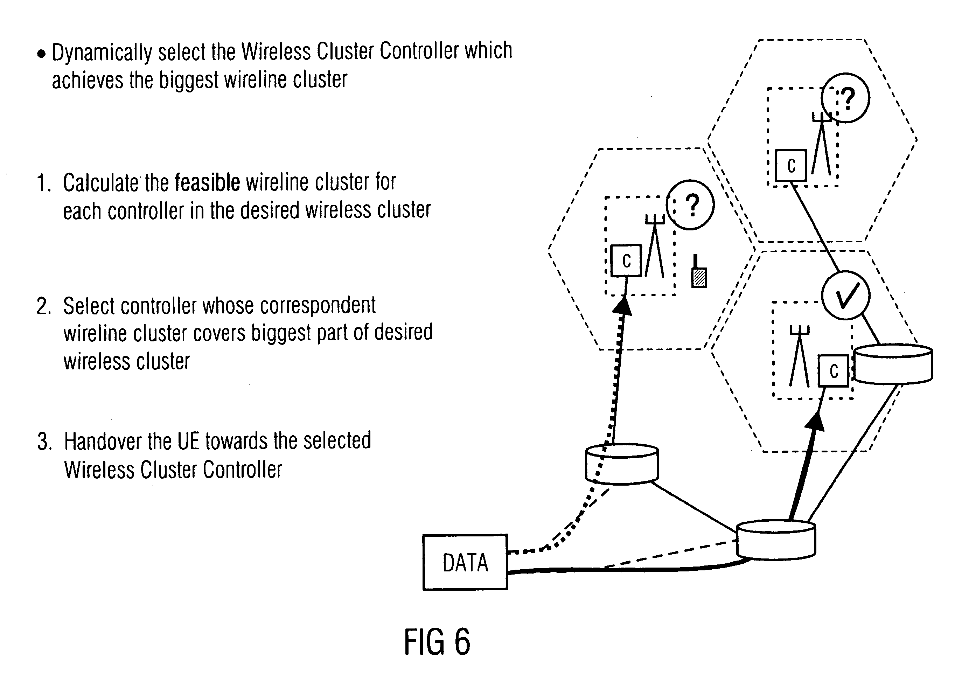

Fig. 6 illustrates an overview of a preferred embodiment for dynamically selecting the wireless cluster controller which achieves the biggest wireline cluster. Fig. 6 illustrates the situation that the controller having the wireline cluster covering the biggest part of the desired wireline cluster is selected, and this is the rightmost cluster controller, since, when this controller controls the mobile device in Fig. 6, then three base stations can take part in the cooperative multipoint transmission. However, if the controller was located in the left or the upper base station, only two base stations could take place and the wireline cluster would be sub-optimum.

Significant advantages of the approach in accordance with the present invention are that the invention can be deployed to improve the CoMP cluster feasibility without the need for any hardware upgrades in the network. Based on the current network infrastructure, the system in accordance with the present invention finds the best possible configuration (CoMP controller location and serving BS for the user equipment) to improve or provide the best service to the user.

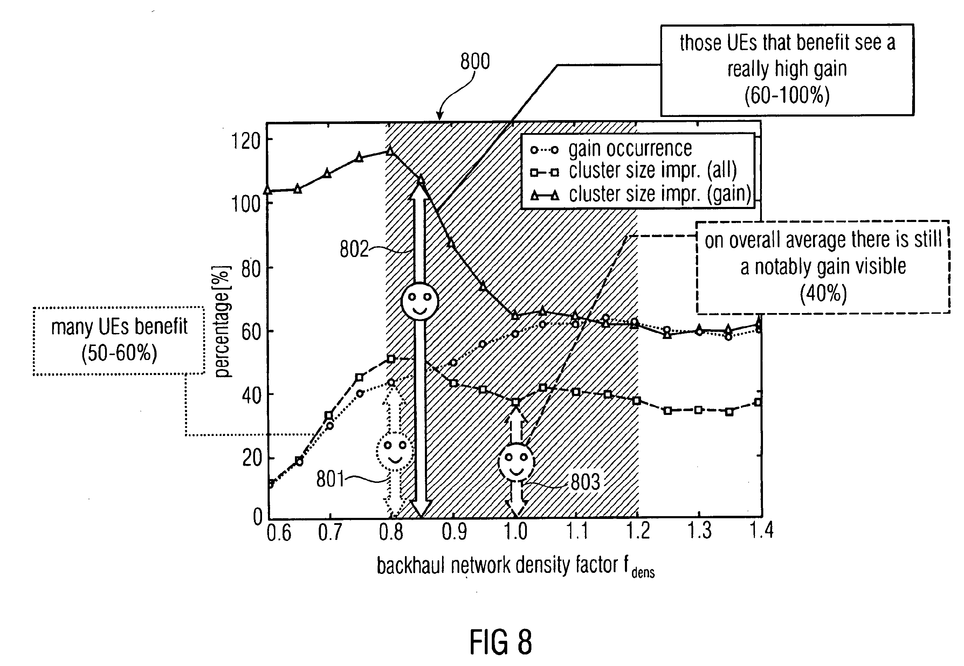

Fig. 8 illustrates a simulation that results in order to demonstrate the improvements by the present invention. The plot contains the game occurrence, the cluster size improvement averaged over all user equipment, and the cluster size improvement averaged over all user equipment that benefits from a cluster improvement. The simulation assumed a tree-like backhaul network deployment corresponding to, for example, a passive optical network (PON) with different link densities. The link density range that corresponds to a realistic backhaul network deployment is marked at 800, i.e., as the shaded area. The plot shows that many user equipment in the network (about 50-60 persons in the example) are able to benefit from the invention as indicated at 801). As indicated at 802, there is user equipment, which is the cluster size improvement between 60 and 100%, which means that the number of base stations in the CoMP cluster can be up to twice as much. When averaging all user equipment, i.e., those that benefit and those that do not see any gains, the cluster size improvement is still approximately 40% as indicated at 803.

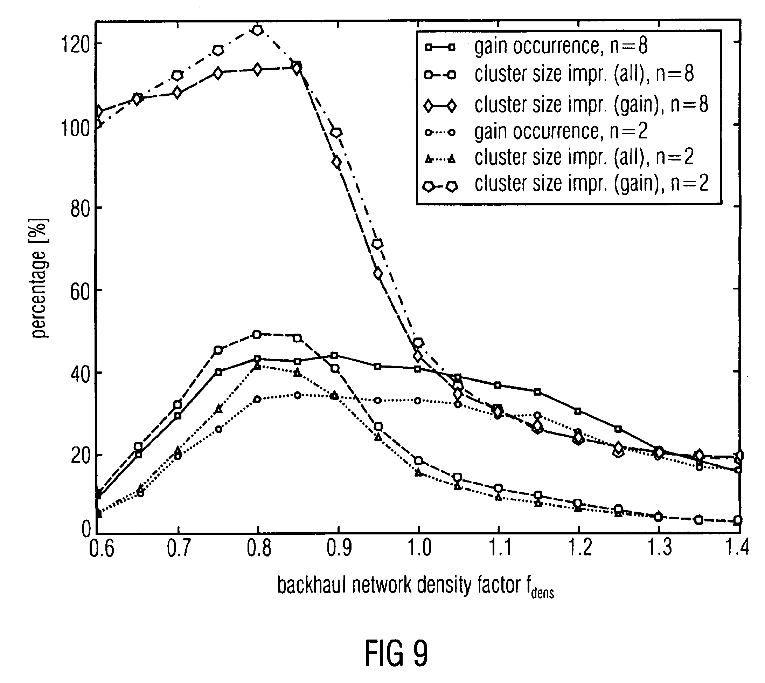

Fig. 9 illustrates the gains for a mesh-like backhaul network deployment. Additionally, different numbers of alternative CoMP controller location set are taken into account when looking for alternative locations (n) are evaluated. The plot shows that the gains are lower compared to the tree-backhaul network. The reason for this is that the higher connectivity in the mesh already permits larger CoMP clusters, which reduces the possibility for improving the cluster size. Different values for n show only a minor influence. This means that it is already sufficient to check the next 2-4 BSs when looking for an alternative CoMP controller location and serving base stations for certain user equipment.

Since the present invention does not need additional functionality in the network, it easily can be deployed to already improve the CoMP performance in the transition phase while backhaul networks are upgraded in the future. Furthermore, there is no trade-off introduced by the inventive embodiments, i.e., users that benefit from the mechanism see a large gain while those users that do not benefit, also do not have any disadvantage.

Hence, the present invention provides a high user performance in CoMP systems, since they allow for the best possible wireless cluster for a given backhaul condition. Furthermore, the CoMP deployment is enabled without doing extensive backhaul network upgrades. The invention can be deployed via software updates and can work in any system which uses CoMP.

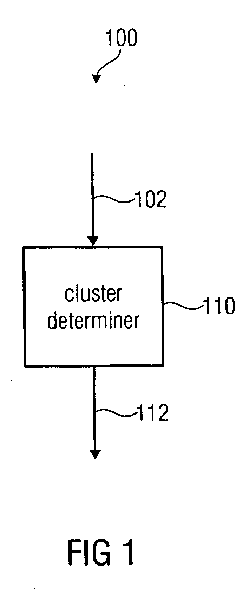

Embodiments dynamically chose the best location for the cluster controller function in the network such that the wireless cluster feasibility is improved. Furthermore, the controller function is selected based on the wireline network properties as, for example, is determined as described in EP 2445246, filed on November 11, 2010 and described in the context of Figs. 1-3. Furthermore, a threshold-based mechanism is preferred to select among the candidate base stations for achieving the desired wireless cluster size. In a further embodiment, a user equipment is handed over to another controller in order to improve the cluster feasibility subsequent to a selection of a new control unit.

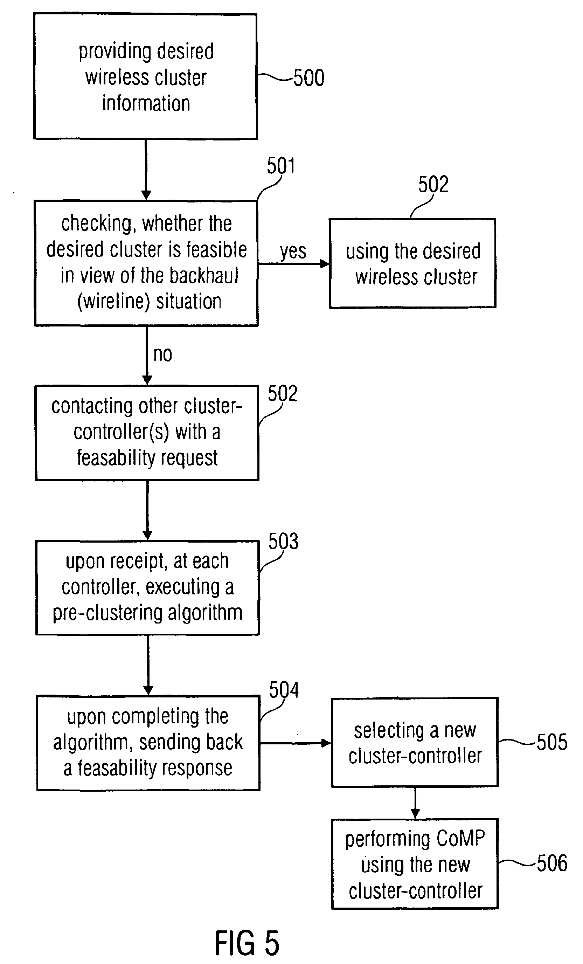

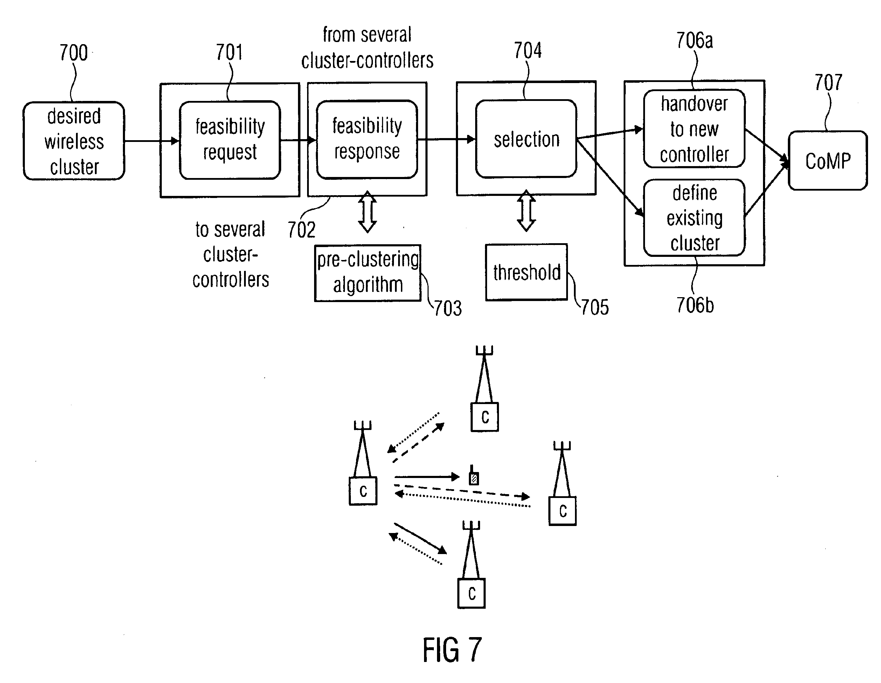

Subsequently, a preferred embodiment of the present invention is described in the context of Figs. 5 and 7. Block 500 describes a step of providing a desired wireless cluster information. The functionality of step 500 is implemented by block 700 in Fig. 7. Step 500 or block 700 select the set of base stations devised for a CoMP transmission/reception. The desired wireless cluster is determined according to known procedures such as described in "A Dynamic Clustering Approach in Wireless Networks with Multi-Cell Cooperative Processing, A. Papadogiannis et al., ICC 2008 Proceedings, pages 1-5". To this end, linear beamforming has been considered for the sum-rate maximization of the uplink. A greedy algorithm for the formation of the clusters of cooperating base stations is presented for cellular networking incorporating multi-cell cooperative processing (MCP). This approach is chosen to be evaluated under a fair mobile station scheduling scenario such as round robin. The objective of the clustering algorithm is sum-rate maximization of the already selected mobile stations.

However, more advanced or more straightforward algorithms can be performed for providing the desired wireless cluster information. Such straightforward processes might, for example, be so that all base stations having a useful radio channel to a mobile station constitute the desired wireless cluster.

In step 501, it is checked whether the desired cluster is feasible in view of the backhaul situation. When it is determined in step 501 that the desired cluster is feasible, everything is in order, and the desired wireless cluster is used as indicated at 502. However, problems occur when it is determined that the desired wireless cluster is not feasible. Hence, when the cluster controller co-located at the serving base station, i.e., the base station actually controlling the mobile device determines that the required cooperative set is not possible due to the current backhaul connections to the other controllers co-located at the potentially cooperating base stations, control is passed to step 502.

This check in step 501 can be performed based on the backhaul latency, the backhaul traffic occurring actually, i.e., at the current time or can be performed by any other backhaul-related parameters. To this end, reference is made to Figs. 1-3 in order to describe a preferred algorithm whether a checking for the desired cluster is feasible in view of the backhaul situation as described in European Patent Application EP 2445246

The achieved gain by applying wireless cooperation techniques like Coordinated Multi-Point transmission (CoMP) or coordinated scheduling in cellular mobile access networks depends on the condition of the wireless channels between the base stations (BSs) and the user terminals (UTs). Depending on these channel properties, clusters of BS cells may be selected to perform the cooperation.

Besides the wireless properties, properties of the wireline backhaul and core network, like link delay, capacity, and load, may be taken into account when deciding how to set up the cooperating cell clusters, too. This is caused by the required exchange of control and user data traffic within cooperating cell sets as this data is transferred via the backhaul and core network. The data rate of this traffic will exceed that targeted capacity of 1 Gbit/s per BS of future backhaul networks, i.e., congestion scenarios that limit the wireless cooperation are likely to occur.

Fig. 1 shows a block diagram of an apparatus 100 for determining a core network configuration 112 of a wireless communication system according to an embodiment of the invention. A core network of a wireless communication system comprises a plurality of base stations, a plurality of wireline links between the base stations and at least one control unit for controlling a cluster of base stations of the plurality of base stations. The apparatus 100 comprises a cluster determiner 110. This cluster determiner 110 determines as the core network configuration 112 at least one cluster of base stations linked by wireline links and controlled by a same control unit based on a predefined basic network configuration 102, so that latencies between each base station of the cluster and the control unit of the cluster are below a maximal allowable latency. The predefined basic network configuration 102 represents information about all base stations of the core network to be configured and about possible wireline links between the base stations.

By considering the constraints of the wireline core network in terms of the latencies between the control unit and the base stations, the limitation of the wireline core network can be considered more accurate for determining clusters of base stations, which may then be used for a cooperative transmission or reception.

In comparison, known methods neglect the wireline network's properties (constraints) and an optimal network is assumed when selecting cells (base stations) for cooperation. This assumption, however, does not hold in reality as the properties of the wireline network influence the performance or even limit the feasibility of the wireless cooperation technique. Hence, wireless channel state information is collected and exchanged for clusters that can never be realized due to the wireline network's limitations. This causes unnecessary overhead (backhaul network traffic and computation load) which even more limits the cooperation opportunities.

Therefore, by using the inventive concept, the core network traffic can be reduced, so that more capacity is left for feasible cooperative transmission resulting in an increase of the wireless transmission capacity. Further, the energy consumption may be reduced, since the core network traffic and the computation load can be reduced. Additionally, the core network can be reconfigured to react on new load situations, which significantly improves the flexibility of the core network.

A core network, also called backhaul network, represents the wired part of a wireless communication system and comprises among others, base stations, control units (also called central controller or processing node) and wireline links between them. The base stations are distributed over an area to transmit or receive data from wireless devices (e.g. cell phone or laptop). The control units are usually located at base stations, but may also be placed independent from the base stations. Typically, there are fewer control units than base stations, although it may be possible that every base station comprises a control unit. A control unit may control one or more base stations and may be responsible for coordinating cooperative transmission or reception among others.

The latency between a base station and a control unit may be defined in several ways. Generally, it indicates a time between receiving a signal at a base station and receiving the signal or an information associated with the signal at the control unit or between a time a signal is transmitted from the control unit to the base station and receiving the signal at the base station. Alternatively, the latency may be the round trip time from receiving a signal at the base station, transmitting the signal to the control unit, receiving the signal at the control unit, processing the signal at the control unit, transmitting a response to the signal to the base station and receiving the response at the base station. For example, the base station receives channel state information from a wireless device, which is used by the control unit for precoding data. This precoded data is then transmitted as a response to the base station for transmitting the data to the wireless device. In this example, the maximal allowable latency may be the time interval, for which the received channel state information is valid.

The predefined basic network configuration 102 represents an input scenario of a core network to be configured. This may be, for example, a number and/or positions of base stations of the core network and possible wireline links between these base stations, for a new network to be planned. Alternatively, the predefined basic network configuration 102 may contain information about positions of base stations of a core network, the wireline links between the base stations and positions of one or more control units of an existing core network to be reconfigured, for example. In which format this information is provided to the cluster determiner 110 is not important as long as the cluster determiner 110 can process this data. For example, the predefined basic network configuration 102 may be a graph that comprises a vertex for each base station and an edge for each link between the base stations of the core network.

For the reconfiguration of an existing core network, the predefined basic network configuration 102 may represent the existing core network. In this example, the predefined basic network configuration 102 may further represent information about all control units of the core network (e.g. the positions of the control units in the core network) and about possible wireline links between base stations and the control units. If the control units are located at base stations, the possible wireline links between base stations and the control units may be a partial set of the possible wireline links between the base stations.

In some embodiments of the invention more constraints of the wireline core network than only the latencies may be considered. For example, a limitation of the capacity of the wireline links may be considered. In other words, the cluster determiner 110 may determine the at least one cluster, so that a capacity of all wireline links between base stations and between a base station and the control unit is larger than a required capacity. In this connection, the capacity of a link represents a maximal data rate or a maximal remaining data rate (if a current load is considered), which can be realized through the wireline link. As mentioned, a current load or a mean load of a link or the whole core network can also be considered, which may be especially of interest for a reconfiguration of an existing core network. In other words, the cluster determiner 110 may determine the at least one cluster, so that the capacity of all wireline links between base stations and between a base station and a control unit under consideration of a current or a mean load of the core network is larger than a required capacity.

Considering a current or mean load of a core network may result in different core network configurations. In this way, the core network can be adapted to different load situations, so that the data transfer and/or the energy consumption can be optimized. For example, the cluster determiner 110 may determine a first core network configuration 112 under consideration of a first load of the core network at the first time and a second core network configuration 112 under consideration of a second load of the core network at the second time. For some different load situations, the first determined core network configuration 112 may be different from the second determined core network configuration 112.

Further, a cost function of the core network may be considered. This cost function may represent a property of the core network as for example the energy consumption or monetary costs for building up the core network or for operating the core network. In this example, the core network configuration 112 may be determined, so that the cost function of the core network is optimized. Depending on the used optimization algorithm, the optimization of the cost function will result in the actual minimum or maximum of the cost function or result in a minimal solution (which may not be the actual minimum or maximum) found after a predefined number of iterations or a predefined calculation time, for example. In other words, the cluster determiner 110 may determine the at least one cluster, so that a cost function of the core network to be configured is optimized.

Usually, a core network of a wireless communication system comprises more base stations than a number of a base stations controllable by a single control unit. Therefore, the cluster determiner 110 may determine more than one cluster of base stations to obtain the core network configuration 112. In other words, the cluster determiner 110 may determine a plurality of clusters of base stations linked by wireline links and controlled by a respective control unit based on the predefined basic network configuration 102, so that each base station of the core network is contained by one of the determined clusters and all latencies between the base stations and the respective control unit of the cluster are below the maximal allowable latency.

The clusters of the core network configuration can be determined based on a variety of different optimization algorithms. For example, the cluster determiner 110 may determine the at least one cluster based on a mixed integer linear program algorithm (MILP) or a breadth-first-search-algorithm (BFS).

One basic approach may be to position a control unit some base stations away from the border of the core network. The border of a core network may be formed by base stations located at the edge of the core network (e.g. other base stations of the core network are only located at one side of these base stations). The number of base stations between the control unit and the base station at the border of the core network may depend on the maximal allowable latency. In other words, the cluster determiner 110 may determine a position of a control unit of the at least one cluster to be determined based on the predefined basic network configuration 102, so that the number of base stations between the control unit and the base station at the border of the core network is maximal while the latency between the control unit and the base station at the border of the core network is below the maximal allowable latency. Further, other constraints of the core network (e.g. capacity and/or cost function as mentioned above) may also be considered, so that the number of base stations between a control unit and a base station at the border of the core network is maximal while considering also these one or more constraints of the core network.

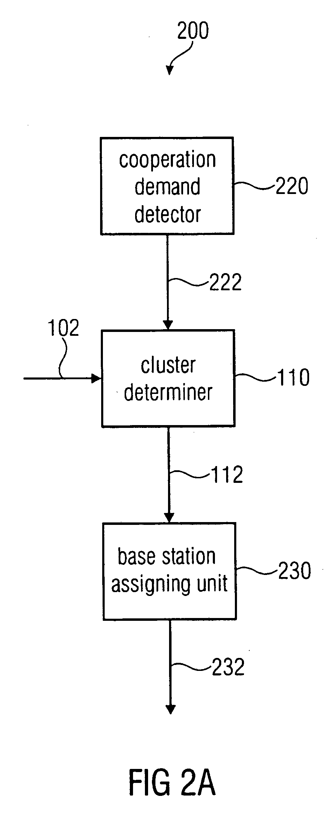

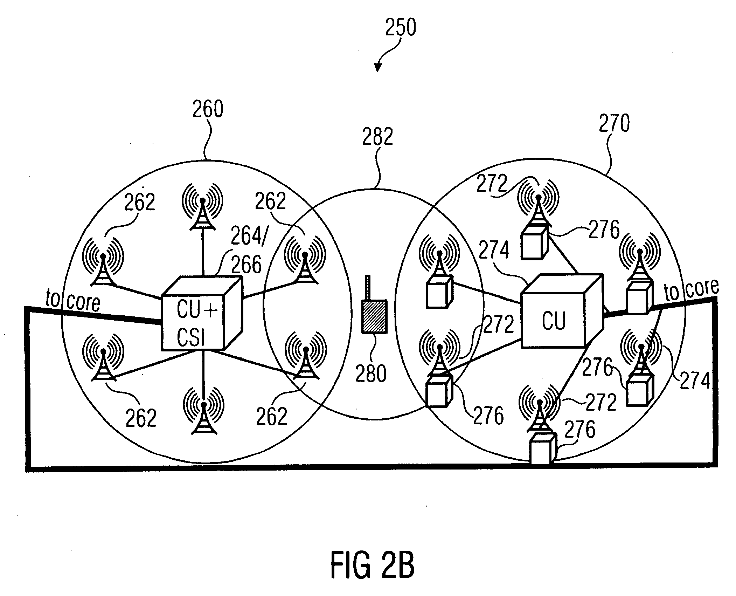

Fig. 2 shows an apparatus 200 for determining a core network configuration 112 of a wireless communication system according to an embodiment of the invention. The apparatus 200 is similar to the apparatus shown in Fig. 1, but comprises additionally an optional cooperation demand detector 220 and/or an optional base station assigning unit 230. The optional cooperation demand detector 220 is connected to the cluster determiner 110 and the cluster determiner 110 is connected to the optional base station assigning unit 230.

The cooperation demand detector 220 may detect a demand 222 of a cooperative transmission or cooperative reception within the wireless communication system. This detected demand 222 of cooperative transmission or cooperative reception may trigger the determination of a (new or optimized) core network configuration by the cluster determiner 110. In this way, a new core network configuration may be determined, which takes into account the detected demand of a cooperative transmission or cooperative reception. For example, a data rate of the wireless connection to a wireless device demanding a high data rate may be detected and the core network may be adapted to this current demand of the wireless device within the range of the wireless communication system.

The base station assigning unit 230 may assign base stations of the core network to a control unit of the core network based on a determined core network configuration to obtain a cluster 232 of assigned base stations. In this way, a current core network configuration may be updated to a new core network configuration by assigning the base stations of a core network to the control units of the core network according to the new determined core network configuration. Thus, varying conditions in terms of demands of cooperative transmissions, cooperative receptions or a current load of the core network can be taken into account. In other words, the base station assigning unit 230 may adapt the core network according to the determined core network configuration.

The cooperation demand detector 220 and the base station assigning unit 230 may be optional parts of the apparatus 200 and may be implemented both together or independent from each other.

Some embodiments according to the invention relate to a wireless communication system with a core network comprising a plurality of base stations, a plurality of wireline links between the base stations and at least one control unit for controlling a cluster of base stations of the plurality of base stations. The wireless communication system comprises an apparatus for determining a core network configuration of a wireless communication system as mentioned above and at least one channel state information determiner. At least one channel state information determiner may determine channel state information between a base station and a wireless device for each base station of a determined cluster located within a transmission range of the wireless device. Further, no channel state information is determined for at least one base station of the core network located within the transmission range of the wireless device not being contained by the determined cluster.

In this way, unnecessary data transfer of channel state information between a wireless device and a base station not contained by the determined cluster can be avoided. So, unnecessary data transfer can be reduced and this saved capacity may be used for other data.

Fig. 2b shows an example of a wireless communications system 250 comprising two clusters of base stations. The first cluster 260 of base stations 262 shows an example for base stations controlled by a central control unit 264 comprising additionally a central channel state information determiner 266. This channel state information determiner 266 may control the determination of channel state information for each base station 262 controlled by the control unit 264. Further, the second cluster 270 of base stations 272 illustrates an example for base stations 272 controlled by a central control unit 274 and a plurality of channel state information determiners 276 located one at each base station 272 of the cluster 270. Each channel state information determiner 272 controls the determination of channel state information of the respective base station 272 in this example. Then, the channel state information may be collected by the control unit 274 and may be used, for example, for a joint precoding of data to be sent to a wireless device 280. Further, Fig. 2b indicates a wireless device 280 with its transmission range 282. The transmission range 282 may be, for example, the area in which the wireless device 280 reaches a sufficient signal strength for base stations. In this example, two base stations 262 of the first cluster 260 and two base stations 272 of the second cluster 270 are within the transmission range 282 of the wireless device 280. Due to the core network configuration, it is not possible to establish a cooperative transmission by all four base stations within transmission range 282 of the wireless device 280. Therefore, it may be sufficient to determine channel state information for the two base stations 262 of the first cluster 260 while no channel state information is determined for the two base stations 272 within the transmission range 282 of the second cluster 270. In this way, unnecessary data transfer within the second cluster 270 can be reduced. In this example, the at least one channel state information determiner 266 may determine only channel state information for each base station of the cluster located within the transmission range 282 of the wireless device 280 without determining channel state information for a base station being not contained by the cluster 260. Alternatively, only the base stations 272 of the second cluster 270 may determine channel state information of the wireless device 280.

For a cooperative transmission or a cooperative reception base stations contained by a same cluster located within the transmission range of a wireless device may be determined to form a subcluster for the cooperative transmission or cooperative reception. In other words, the cluster determiner 110 or a control unit of a cluster may determine base stations contained by a same cluster of the core network and located within the transmission range of the wireless device to obtain a subcluster of base stations. Further, the cluster determiner 110 or the control unit of the cluster may determine base stations of the sub cluster (e.g. only one, some or all base stations of the sub cluster) being able to perform a cooperative transmission to the wireless device or a cooperative reception from the wireless device.

In general, the cluster determiner 110, the cooperation demand detector 220, the base station assigning unit 230 and/or the one or more channel state information determiner 266, 276 may be independent hardware units or part of a computer, digital signal processor or microcontroller as well as a computer program or a software product for running on a computer, digital signal processor or microcontroller.

In the following, examples for the determination of a core network configuration are described in more detail. Although different aspects of the invention are described together in these detailed examples, the different aspects may also be realized independent from each other.

How and where to apply wireless cooperation techniques, like Coordinated Multi-Point Transmission (CoMP) or joint scheduling, does not only depend on the wireless channel conditions but also on the design and current state (e.g., load) of the mobile access network's wireline part. For example, this may be mainly caused by the capacity and latency requirements, which have to be fulfilled on the wireline side to permit cooperation on the wireless side.

The proposed concept may enable to design the wireline part of a mobile access network such that the desired wireless cooperation technique can be applied in the whole network. This design step happens before the network is deployed. Further, the proposed concept may enable to find clusters in a running mobile access network in which the desired wireless cooperation technique can be applied at a given point in time (depending on, e.g., the current load). Finding these clusters may be done in regular intervals (on a time scale of seconds) while the network is operating. Within the found wireline clusters, actual wireless clusters (sub clusters) may be chosen depending on the wireless channel conditions (on a time scale of single wireless frames).

For example, a heuristic algorithm that determines a core network configuration while providing a solution quality that is close to the optimum may be described in the following. Due to the algorithm's high efficiency (less than 1 second runtime compared to 20 hours for the optimal solution) it can be applied in the required time scales. Hence, the important aspect of wireline restrictions for wireless cooperation techniques can be taken into account to improve their performance and to decrease their implementation overhead.

The wireline network may be designed or reconfigured such that it can be assumed to be optimal for a certain (set of) wireless cooperation techniques. This can happen offline, i.e., before the cooperative network is deployed, and to a certain extent also online, i.e., while the network is operating after it has been deployed.

Further, for example, it may be accepted that the wireline network is suboptimal at some places. To deal with this, the decision process on how to choose cooperating cell clusters is supported by information about the wireline network part in addition to the wireless channel conditions. This may happen online, i.e., while the network is operating.

Due to changes that occur during the network's lifetime, like equipment failures or changing traffic load, a reconfiguration may be advantageous. Especially, the changing traffic load in the network is challenging as it changes on time scales even below one second.

Both approaches can be solved by formulating them as a mathematical optimization problem. Solving these optimization problems, however, may be NP-complete and takes up to 20 hours for just small input scenarios that consist of 50 cells (base stations). This long runtime makes it impossible to use this solution approach for real, large networks and to use the approaches online, i.e., while the cooperative network is running.

Alternatively, a heuristic algorithm that approximates the optimal solution at reduced runtime and memory requirements is proposed.

For example, to be able to use wireless cooperation techniques in real networks, the scenarios described above, have to be solved. The design or reconfiguration of the wireline network may usually be solved once at the design time of the network. Include information about the wireline network part in addition to the wireless channel conditions when choosing cooperating cell clusters may be solved in regular intervals during the network's lifetime to react on changes in the network, like varying load.

First, an algorithm that solves the network design problem is proposed, for example. As input, the algorithm takes the locations of all cells (e.g. a cell may be the area controlled by a base station or the base station itself) and the possible interconnections (wireline links) between them. In this context, interconnection between cells means that there is a link between the base stations that control the cells. This input can be, e.g., defined as a graph that contains a node (base station) for each cell and an edge for each possible interconnection between the cells. Nodes and edges may have properties that describe their requirements and capabilities, e.g., the required bandwidth of a cell or the capacity of an interconnecting link. Furthermore, a set of constraints may be provided as input, e.g., required capacity on the wireline side or maximum tolerable (allowable) latency between cooperating cells (base stations). These constraints may be imposed by the desired wireless cooperation technique and need to be fulfilled in each valid solution of the problem, for example.

The proposed algorithm may determine where to optimally position common functions like controllers or processing nodes (control units) within the network. These locations depend on the aforementioned requirements of the wireless cooperation technique. Further, the algorithm may decide how to cluster the cells and how to interconnect the cells within the clusters based on the given possible interconnections (links). All these decisions may be done such that a desired cost metric, like monetary costs, system performance, or energy consumption, is optimized.

For finding feasible clusters in a running (existing) network, the just described algorithm may be slightly modified. Instead of calculating optimal positions for controller/processing nodes in the network, they are fixed and given as additional input parameters. The same is done for the interconnections between the cells. Using this information, the algorithm may just calculate all largest possible *wireline* clusters for a certain cooperation technique based on the given network configuration, its current state (e.g., load), and the technique's constraints, for example. Within these possible clusters, cells can be selected for cooperation according to the wireless channel conditions. Note that such *wireless* clusters cannot span over multiple of the found *wireline* clusters as requirements of the cooperation technique would not be fulfilled.

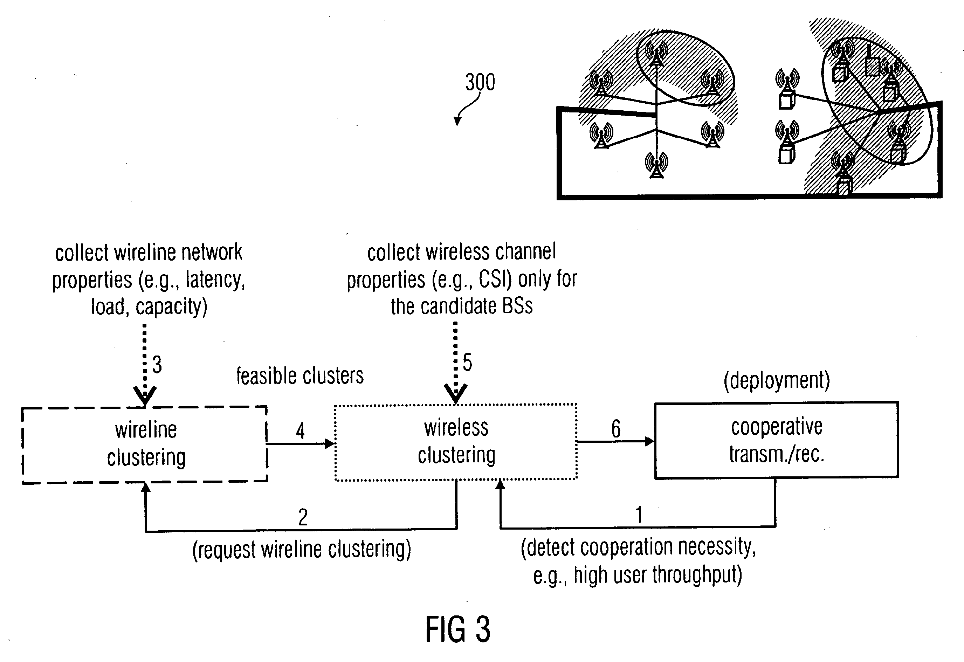

An example of an overview 300 of such a system that incorporates both *wireline* and *wireless* information for clustering is illustrated in Fig. 3. After finding out that cooperation is needed (1), the wireline clustering is triggered (2) based on the current network state (3). The resulting clusters are passed to the wireless clustering mechanism (4) that only considers the feasible clusters and hence only collects wireless channel properties for BSs that are in the feasible clusters (5). In the last step, the calculated clusters are deployed in the network (6).

In this way, infrastructure costs may be reduced. Wireless cooperation techniques have constraints towards the wireline part of the network, e.g., in terms of capacity or latency. These constraints must not be violated, otherwise gains on the wireless side may diminish or cooperation may even be impossible. This means without using the proposed concept, wireless cooperation techniques can only be exploited with a heavily over-provisioned wireline part (core network) of the mobile access network (wireless communication system). This, however, is not desirable from a network operator's point of view as over-provisioning results in expensive, unused resources. Hence, the proposed concept may lead to cost savings for mobile network operators.

Further, the CoMP performance may be increased. For the *wireless* clustering channel state information (CSI) may need to be gathered from all candidate cells. This not only causes non-neglectable overhead on the wireless side but also on the wireline side as the collected information has to be exchanged between the candidate cells via the backhaul network. Both of these overheads are reduced when using the proposed concept for wireline pre-clustering as this lowers the number of candidate cells for which CSI has to be collected.

In step 502, the cluster feasibility processor 400 in Fig. 4 contacts other cluster controllers with feasibility requests. This is indicated in Fig. 7 at 701. The other cluster controllers react with a feasibility response per cluster controller indicated at 702 in Fig. 7. Before the cluster controllers can reply, they perform a pre-clustering algorithm illustrated at 503 in Fig. 5. Hence, each cluster controller performs its own feasibility procedure which can, again, be performed as discussed in connection with Figs. 1-3 and as described in the mentioned European patent application. Once this calculation is performed, the result is sent back to the cluster controller co-located with the serving base station by means of the feasibility response message as indicated at 504 in Fig. 5. Hence, the feasibility response requires the pre-clustering algorithm 703, which is performed in each cluster controller or each control unit or specifically in all the other control units with respect to Fig. 4 as illustrated at 503 in Fig. 5. Then, it is assumed that the apparatus for determining a control unit as discussed in context with Fig. 4 receives several identifications of alternative cluster controllers and their properties, such as their size of the CoMP cluster. Hence, an exemplary feasibility response from each cluster controller would be that each cluster controller states its identification and, additionally, the properties of this cluster. The properties of this cluster may refer to the number of base stations in the cluster which is feasible for the respective cluster controller. Hence, one cluster controller might reply by saying that its feasible cluster size is only a single base station and the other one might reply by saying that its cluster size would be five base stations and a third cluster controller would reply by saying that its cluster would comprise four base stations. In such a scenario, the control units vector 403 would select 505 the new cluster controller. This is also illustrated at 704 in Fig. 7. Preferably, the selection takes place using the threshold or a different criterion. In the exemplary scenario, the selection 704 would result in a selection of the control unit offering a cluster of five base stations. However, a threshold 705 is useful, since in a scenario, in which the current, i.e., actually existing cluster already has four base stations, it might not be useful to switch over to the new cluster controller due to the only additional base station. The signaling overhead might forbid to switch over with only such a small improvement. Therefore, a threshold 705 could be installed saying that a switchover is only performed when the number of base stations of the new feasible cluster is two base stations higher than the number of base stations of the already existing clusters.

Alternatively, a selection threshold could be applied so that not always the best control unit is selected, but a control unit which already provides an improvement over the existing control unit, although selecting the control unit offering the largest feasible cluster, i.e. the feasible cluster with the highest number of base stations is preferred over other solutions, but other sub-optimum solutions which also dynamically change the cluster to a cluster not having the best properties might also be useful in certain situations in view of efficiency, speed and other considerations.

Step 506 illustrates that, as soon as the new cluster controller is selected, a cooperative multipoint transmission or reception is performed using the new cluster controller. As illustrated in Fig. 7, this procedure may require two steps or blocks 706a and 706b. In step 706a, a handover to the new controller is performed which means that this controller will be the next serving base station for the wireless device. However, as stated before, this is not ultimately required, since the control of the wireless wireline or wireless cluster can be performed separate from the procedure required by actually serving a base station.

Furthermore, step 706b illustrates the act of actually defining the cluster. In this procedure, steps discussed with respect to Figs. 1-3 can be applied and it is preferred that now the controller collects the channel state information for the base stations which are actually taking part in the feasible cluster. Hence, it is made sure that this procedure does not take place in the pre-clustering algorithm 703 for all requested control units, but only takes place for the finally decided new cluster controller. However, in other embodiments, it might even be an option to calculate the complete cluster information in the pre-clustering algorithm 703 for more cluster controllers, to store this information and to then read the stored information by a certain cluster controller selected by the selection 704 in step 706b. Then, as illustrated in step 707, the cooperative multipoint transmission/reception is performed.

As stated before, a feasibility request 701 is sent from the control unit, and the purpose of this message is to determine, at each of these cluster controller locations, what the achievable wireless cluster size is, if each of them, independently and based on the current backhaul status would act as the most responsible for leading the cluster aimed at serving the target user terminal.

However, in other embodiments, a feasibility request is not necessary. Instead, the other controllers could provide a message regarding their feasible wireless cluster for a certain wireless device in transmission/reception reach on a regular basis such as every 10 seconds or every minute, etc. Naturally, such time intervals are feasible and the time intervals can be selected depending on the requirements. Other timings for non-triggered feasibility responses may be other events such as random events controlled by a random generator, so that control units at different places provide their feasibility responses at non-synchronized time instants so that the cluster feasibility processor in the apparatus for determining a control unit would not actually request the information by itself, but would receive replies to any request by itself, but would receive feasibility responses based on external requests. Hence, the cluster feasibility processor/cluster feasibility processor does not actually have to send out requests, but this is preferred due to network overhead constraints.

The selection performed by the control unit selector 403 in Fig. 4 can be performed based on different criteria. A threshold based mechanism, for example, can be used. If the feasibility improvement for a given cluster controller is higher than a certain value, i.e., in an embodiment such a value could be represented by the achievable cluster size, then such a cluster controller is selected as the new serving one for the user terminal which requires cooperative multipoint transmission/reception. If no cluster controller is able to provide any improvement, then the control unit selector 403 does not select a new controller, but the cluster is eventually formed using the actually working control unit. Again, the procedure described with respect to Figs. 1-3 can be applied for this purpose. When, however, the cluster controller re-assignment is able to provide an improved wireless cluster feasibility exceeding the selected threshold, a hand-over procedure is applied. This can happen as a generic signaling mechanism for a network triggered handover. The serving base station co-located with the cluster controller warns the user to switch to the base station co-located with the selected cluster controller. The user terminal will then start the handover process according to a mobile network procedure (request/response). Once the handover is complete, the wireless CoMP transmission/reception starts. Alternatively, different procedures that keep the same serving base station and only re-assign the cluster controller can be used. In this case, upgrades to the core network elements should also be introduced in order to re-direct the traffic flow to the user towards a cluster controller that is not co-located with the serving base station.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a non-transitory data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. An apparatus for determining a control unit of a plurality of control units in a wireless communication system for the purpose of controlling, by the control unit, a cooperative transmission or a cooperative reception between base stations and a wireless device, wherein the wireless communication system comprises a backhaul core network with a plurality of control units, and comprises a plurality of base stations, wherein each control unit is configured for controlling one or more base stations in a cooperative transmission or a cooperative reception between base stations and a wireless device, the one or more base stations being configured for serving a wireless device, the apparatus comprising:
a wireline cluster determiner configured to determine (501) whether or not a wireline cluster of base stations controllable by the control unit controlling the serving base station contains a desired wireless cluster of base stations, the wireline cluster of base stations being determined under consideration of a property of the backhaul core network, wherein all base stations having a useful radio channel to the wireless device constitute the desired wireless cluster of base stations;
a cluster feasibility processor (400) configured to send (502, 701), when a wireline cluster of base stations does not contain the desired wireless cluster of base stations, a request for feasible wireline clusters to an at least one other control unit than the control unit controlling the serving base station serving the wireless device, and configured to receive (702) a cluster feasibility response from the at least one other control unit, when the wireline cluster of base stations does not contain the desired wireless cluster of base stations, the cluster feasibility response containing information on a feasible wireline cluster of base stations controllable by the at least one other control unit in response to the feasibility request to the at least one other control unit, wherein the feasible wireline cluster of base stations controllable by the at least one other control unit was obtained under consideration of a property of the backhaul core network; and
a control unit selector (403) configured to select (505), when the wireline cluster of base stations does not contain the desired wireless cluster of base stations, the at least one other control unit if the information on the feasible wireline cluster of base stations controllable by the at least one other control unit contained in the cluster feasibility response fulfills a selection criterion so that the at least one other control unit controls a cooperative transmission or a cooperative reception between the base stations of the feasible wireline cluster of base stations controllable by the at least one other control unit and the wireless device.

2. The apparatus according to claim 1, wherein the control unit selector is configured to select a first other control unit for controlling a cooperative transmission or a cooperative reception between at least two base stations and a first wireless device and to select a second other control unit for controlling a cooperative transmission or a cooperative reception between at least two base stations and a second wireless device, if the received information of the feasible wireline cluster of base stations controllable by the first other control unit fulfills the selection criterion for the first wireless device and the received information of the feasible wireline cluster of base stations controllable by the second other control unit fulfills the selection criterion for the second wireless device.

3. The apparatus according to claim 1 or 2, wherein the selection criterion is fulfilled, if the feasible wireline cluster of base stations controllable by the at least one other control unit contains more base stations of a desired wireless cluster of base stations than a selection threshold, contains more base stations of a desired wireless cluster of base stations than a wireline cluster of base stations controllable by the control unit controlling the serving base station or contains more base stations of a desired wireless cluster of base stations than all feasible wireline clusters known due to received information of feasible wireline clusters and than a wireline cluster of base stations controllable by the control unit controlling the serving base station.

4. The apparatus according to one of the claims 1 to 3, wherein the control unit selector is configured to select the at least one control unit based on a comparison of an information of a wireline cluster of base stations controllable by the control unit controlling the serving base station and the at least one received information of the feasible wireline cluster of base stations controllable by the at least one other control unit.

5. The apparatus according to one of the claims 1 to 4, wherein the cluster feasibility processor is configured to send a request for feasible wireline clusters to all control units controlling a base station contained by a desired wireless cluster.

6. The apparatus according to claim 1, wherein the property of the backhaul core network is a maximal allowable latency between a base station of a wireline cluster and the control unit of the wireline cluster or a capacity of a wireline link between base stations of the wireline cluster or a base station of the wireline cluster and the control unit of the wireline cluster.

7. The apparatus according to one of the claims 1 to 6, wherein the control unit selector is configured to trigger a cooperative transmission or a cooperative reception between at least two base stations and the wireless device controlled by the selected control unit.

8. The apparatus according to one of the claims 1 to 7, wherein the at least one received information of the feasible wireline cluster of base stations controllable by the at least one other control unit represents a set of base stations contained by the feasible wireline cluster, represents a set of base stations contained by the feasible wireline cluster as well as contained by a desired wireless cluster of base stations or represents an information indicating whether or not the feasible wireline cluster completely contains a desired wireless cluster of base stations.

9. The apparatus according to one of the claims 1 to 8, wherein the control unit selector is configured to trigger a switching of the wireless device from the currently serving base station to a base station controlled by the selected control unit.

10. A wireless communication system with a backhaul core network with a plurality of control units and a plurality of base stations, wherein each control unit is able to control one or more base stations, the wireless communication system comprising:
an apparatus for determining a control unit of a plurality of control units in a wireless communication system for controlling a cooperative transmission or a cooperative reception between base stations and a wireless device according to one of the claims 1 to 9; and
the at least one other control unit configured to control a cooperative transmission or a cooperative reception between the at least two base stations and the wireless device.

11. A method for determining a control unit of a plurality of control units in a wireless communication system for the purpose of controlling, by the control unit, a cooperative transmission or a cooperative reception between base stations and a wireless device, wherein the wireless communication system comprises a backhaul core network with a plurality of control units, and comprises a plurality of base stations, wherein each control unit is configured for controlling one or more base stations in a cooperative transmission or a cooperative reception between base stations and a wireless device, the one or more base stations being configured for serving a wireless device, the method comprising:
determining (501), whether or not a wireline cluster of base stations controllable by the control unit controlling the serving base station contains a desired wireless cluster of base stations, the wireline cluster of base stations being determined under consideration of a property of the backhaul core network, wherein all base stations having a useful radio channel to the wireless device constitute the desired wireless cluster of base stations;
sending (502, 701), when a wireline cluster of base stations does not contain the desired wireless cluster of base stations, a request for feasible wireline clusters to an at least one other control unit than the control unit controlling the serving base station serving the wireless device;
receiving (400, 702), when the wireline cluster of base stations does not contain the desired wireless cluster of base stations, a cluster feasibility response from the at least one other control unit, the cluster feasibility response containing information on a feasible wireline cluster of base stations controllable by the at least one other control unit in response to the feasibility request to the at least one other control unit, wherein the feasible wireline cluster of base stations controllable by the at least one other control unit was obtained under consideration of a property of the backhaul core network; and
selecting (403, 505), when the wireline cluster of base stations does not contain the desired wireless cluster of base stations, the at least one other control unit if the information on the feasible wireline cluster of base stations controllable by the at least one other control unit contained in the cluster feasibility response fulfills a selection criterion so that the at least one other control unit controls a cooperative transmission or a cooperative reception between the base stations of the feasible wireline cluster of base stations controllable by the at least one other control unit and the wireless device.

12. A computer program product with a program code comprising instructions which, when executed by a computer or a microprocessor, causes the computer or the microprocessor to perform all the steps of the method according to claim 11.

## Patentansprüche

1. Eine Vorrichtung zum Bestimmen einer Steuereinheit einer Mehrzahl von Steuereinheiten bei einem drahtlosen Kommunikationssystem zum Zweck eines Steuerns, seitens der Steuereinheit, eines kooperativen Sendens oder eines kooperativen Empfangs zwischen Basisstationen und einem drahtlosen Gerät, wobei das drahtlose Kommunikationssystem ein Backhaul-Kernnetz mit einer Mehrzahl von Steuereinheiten aufweist und eine Mehrzahl von Basisstationen aufweist, wobei jede Steuereinheit zum Steuern einer oder mehrerer Basisstationen bei einem kooperativen Senden oder einem kooperativen Empfang zwischen Basisstationen und einem drahtlosen Gerät konfiguriert ist, wobei die eine oder die mehreren Basisstationen dazu konfiguriert sind, ein drahtloses Gerät zu bedienen, wobei die Vorrichtung folgende Merkmale aufweist:
einen Verdrahtetes-Cluster-Bestimmer, der dazu konfiguriert ist, zu bestimmen (501), ob ein verdrahtetes Cluster von Basisstationen, die durch die Steuereinheit, die die bedienende Basisstation steuert, steuerbar sind, ein gewünschtes drahtloses Cluster von Basisstationen enthält, wobei das verdrahtete Cluster von Basisstationen unter Berücksichtigung einer Eigenschaft des Backhaul-Kernnetzes bestimmt wird, wobei alle Basisstationen, die einen nützlichen Funkkanal zu dem drahtlosen Gerät aufweisen, das gewünschte drahtlose Cluster von Basisstationen bilden;
einen Clusterdurchführbarkeitsprozessor (400), der dazu konfiguriert ist, dann, wenn ein verdrahtetes Cluster von Basisstationen nicht das gewünschte drahtlose Cluster von Basisstationen enthält, eine Anfrage nach durchführbaren verdrahteten Clustern an zumindest eine andere Steuereinheit als die Steuereinheit zu senden (502, 701), die die bedienende Basisstation steuert, die das drahtlose Gerät bedient, und der dazu konfiguriert ist, dann, wenn das verdrahtete Cluster von Basisstationen nicht das gewünschte drahtlose Cluster von Basisstationen enthält, von der zumindest einen anderen Steuereinheit eine Clusterdurchführbarkeitsantwort zu empfangen (702), wobei die Clusterdurchführbarkeitsantwort ansprechend auf die Durchführbarkeitsanfrage an die zumindest eine andere Steuereinheit eine Information über ein durchführbares verdrahtetes Cluster von Basisstationen enthält, die durch die zumindest eine andere Steuereinheit steuerbar sind, wobei das durchführbare verdrahtete Cluster von Basisstationen, die durch die zumindest eine andere Steuereinheit steuerbar sind, unter Berücksichtigung einer Eigenschaft des Backhaul-Kernnetzes erhalten wurde; und
einen Steuereinheitsselektor (403), der dazu konfiguriert, dann, wenn das verdrahtete Cluster von Basisstationen nicht das gewünschte drahtlose Cluster von Basisstationen enthält, die zumindest eine andere Steuereinheit auszuwählen (505), falls die Information über das durchführbare verdrahtete Cluster von Basisstationen, die durch die zumindest eine andere Steuereinheit steuerbar sind, die in der Clusterdurchführbarkeitsantwort enthalten ist, ein Auswahlkriterium erfüllt, sodass die zumindest eine andere Steuereinheit ein kooperatives Senden oder einen kooperativen Empfang zwischen den Basisstationen des durchführbaren verdrahteten Clusters von Basisstationen, die durch die zumindest eine andere Steuereinheit steuerbar sind, und dem drahtlosen Gerät steuert.

2. Die Vorrichtung gemäß Anspruch 1, bei der der Steuereinheitsselektor dazu konfiguriert ist, eine erste andere Steuereinheit zum Steuern eines kooperativen Sendens oder eines kooperativen Empfangs zwischen zumindest zwei Basisstationen und einem ersten drahtlosen Gerät auszuwählen und eine zweite andere Steuereinheit zum Steuern eines kooperativen Sendens oder eines kooperativen Empfangs zwischen zumindest zwei Basisstationen und einem zweiten drahtlosen Gerät auszuwählen, falls die empfangene Information über das durchführbare verdrahtete Cluster von Basisstationen, die durch die erste andere Steuereinheit steuerbar sind, das Auswahlkriterium für das erste drahtlose Gerät erfüllt und die empfangene Information über das durchführbare verdrahtete Cluster von Basisstationen, die durch die zweite andere Steuereinheit steuerbar sind, das Auswahlkriterium für das zweite drahtlose Gerät erfüllt.

3. Die Vorrichtung gemäß Anspruch 1 oder 2, bei der das Auswahlkriterium erfüllt ist, falls das durchführbare verdrahtete Cluster von Basisstationen, die durch die zumindest eine andere Steuereinheit steuerbar sind, mehr Basisstationen eines gewünschten drahtlosen Clusters von Basisstationen enthält als eine Auswahlschwelle, mehr Basisstationen eines gewünschten drahtlosen Clusters von Basisstationen enthält als ein verdrahtetes Cluster von Basisstationen, die durch die Steuereinheit steuerbar sind, die die bedienende Basisstation steuert, oder mehr Basisstationen eines gewünschten drahtlosen Clusters von Basisstationen enthält als alle durchführbaren verdrahteten Cluster, die aufgrund einer empfangenen Information über durchführbare verdrahtete Cluster bekannt sind, und als ein verdrahtetes Cluster von Basisstationen, die durch die Steuereinheit steuerbar sind, die die bedienende Basisstation steuert.

4. Die Vorrichtung gemäß einem der Ansprüche 1 bis 3, bei der der Steuereinheitsselektor dazu konfiguriert ist, die zumindest eine Steuereinheit auf der Basis eines Vergleichs einer Information über ein verdrahtetes Cluster von Basisstationen, die durch die Steuereinheit steuerbar sind, die die bedienende Basisstation steuert, und der zumindest einen empfangenen Information über das durchführbare verdrahtete Cluster von Basisstationen, die durch die zumindest eine andere Steuereinheit steuerbar sind, auszuwählen.

5. Die Vorrichtung gemäß einem der Ansprüche 1 bis 4, bei der der Clusterdurchführbarkeitsprozessor dazu konfiguriert ist, eine Anfrage nach durchführbaren verdrahteten Clustern an alle Steuereinheiten zu senden, die eine Basisstation steuern, die in einem gewünschten drahtlosen Cluster enthalten ist.

6. Die Vorrichtung gemäß Anspruch 1, bei der die Eigenschaft des BackhaulKernnetzes eine maximale zulässige Latenzzeit zwischen einer Basisstation eines verdrahteten Clusters und der Steuereinheit des verdrahteten Clusters oder eine Kapazität einer Kabelverbindung zwischen Basisstationen des verdrahteten Clusters oder einer Basisstation des verdrahteten Clusters und der Steuereinheit des verdrahteten Clusters ist.

7. Die Vorrichtung gemäß einem der Ansprüche 1 bis 6, bei der der Steuereinheitsselektor dazu konfiguriert ist, ein kooperatives Senden oder einen kooperativen Empfang zwischen zumindest zwei Basisstationen und dem durch die ausgewählte Steuereinheit gesteuerten drahtlosen Gerät auszulösen.

8. Die Vorrichtung gemäß einem der Ansprüche 1 bis 7, bei der die zumindest eine empfangene Information über das durchführbare verdrahtete Cluster von Basisstationen, die durch die zumindest eine andere Steuereinheit steuerbar sind, einen Satz von Basisstationen darstellt, die in dem durchführbaren verdrahteten Cluster enthalten sind, einen Satz von Basisstationen darstellt, die in dem durchführbaren verdrahteten Cluster enthalten sind sowie in einem gewünschten drahtlosen Cluster von Basisstationen enthalten sind, oder eine Information darstellt, die angibt, ob das durchführbare verdrahtete Cluster ein gewünschtes drahtloses Cluster von Basisstationen vollständig enthält oder nicht.

9. Die Vorrichtung gemäß einem der Ansprüche 1 bis 8, bei der der Steuereinheitsselektor dazu konfiguriert ist, ein Umschalten des drahtlosen Geräts von der derzeit bedienenden Basisstation zu einer durch die ausgewählte Steuereinheit gesteuerten Basisstation auszulösen.

10. Ein drahtloses Kommunikationssystem mit einem Backhaul-Kernnetz mit einer Mehrzahl von Steuereinheiten und einer Mehrzahl von Basisstationen, wobei jede Steuereinheit in der Lage ist, eine oder mehrere Basisstationen zu steuern, wobei das drahtlose Kommunikationssystem folgende Merkmale aufweist:
eine Vorrichtung zum Bestimmen einer Steuereinheit einer Mehrzahl von Steuereinheiten in/bei einem drahtlosen Kommunikationssystem zum Steuern eines kooperativen Sendens oder eines kooperativen Empfangs zwischen Basisstationen und einem drahtlosen Gerät gemäß einem der Ansprüche 1 bis 9; und
die zumindest eine andere Steuereinheit, die dazu konfiguriert ist, ein kooperatives Senden oder einen kooperativen Empfang zwischen den zumindest zwei Basisstationen und dem drahtlosen Gerät zu steuern.

11. Ein Verfahren zum Bestimmen einer Steuereinheit einer Mehrzahl von Steuereinheiten bei einem drahtlosen Kommunikationssystem zum Zweck eines Steuerns, seitens der Steuereinheit, eines kooperativen Sendens oder eines kooperativen Empfangs zwischen Basisstationen und einem drahtlosen Gerät, wobei das drahtlose Kommunikationssystem ein Backhaul-Kernnetz mit einer Mehrzahl von Steuereinheiten aufweist und eine Mehrzahl von Basisstationen aufweist, wobei jede Steuereinheit zum Steuern einer oder mehrerer Basisstationen bei einem kooperativen Senden oder einem kooperativen Empfang zwischen Basisstationen und einem drahtlosen Gerät konfiguriert ist, wobei die eine oder die mehreren Basisstationen dazu konfiguriert sind, ein drahtloses Gerät zu bedienen, wobei das Verfahren folgende Schritte aufweist:
Bestimmen (501), ob ein verdrahtetes Cluster von Basisstationen, die durch die Steuereinheit, die die bedienende Basisstation steuert, steuerbar sind, ein gewünschtes drahtloses Cluster von Basisstationen enthält, wobei das verdrahtete Cluster von Basisstationen unter Berücksichtigung einer Eigenschaft des Backhaul-Kernnetzes bestimmt wird, wobei alle Basisstationen, die einen nützlichen Funkkanal zu dem drahtlosen Gerät aufweisen, das gewünschte drahtlose Cluster von Basisstationen bilden;
Senden (502, 701) einer Anfrage nach durchführbaren verdrahteten Clustern an zumindest eine andere Steuereinheit als die Steuereinheit, die die bedienende Basisstation steuert, die das drahtlose Gerät bedient, dann, wenn ein verdrahtetes Cluster von Basisstationen nicht das gewünschte drahtlose Cluster von Basisstationen enthält;
Empfangen (702) einer Clusterdurchführbarkeitsantwort von der zumindest einen anderen Steuereinheit dann, wenn das verdrahtete Cluster von Basisstationen nicht das gewünschte drahtlose Cluster von Basisstationen enthält, wobei die Clusterdurchführbarkeitsantwort ansprechend auf die Durchführbarkeitsanfrage an die zumindest eine andere Steuereinheit eine Information über ein durchführbares verdrahtetes Cluster von Basisstationen enthält, die durch die zumindest eine andere Steuereinheit steuerbar sind, wobei das durchführbare verdrahtete Cluster von Basisstationen, die durch die zumindest eine andere Steuereinheit steuerbar sind, unter Berücksichtigung einer Eigenschaft des Backhaul-Kernnetzes erhalten wurde; und
Auswählen (403, 505) der zumindest einen anderen Steuereinheit dann, wenn das verdrahtete Cluster von Basisstationen nicht das gewünschte drahtlose Cluster von Basisstationen enthält, falls die Information über das durchführbare verdrahtete Cluster von Basisstationen, die durch die zumindest eine andere Steuereinheit steuerbar sind, die in der Clusterdurchführbarkeitsantwort enthalten ist, ein Auswahlkriterium erfüllt, sodass die zumindest eine andere Steuereinheit ein kooperatives Senden oder einen kooperativen Empfang zwischen den Basisstationen des durchführbaren verdrahteten Clusters von Basisstationen, die durch die zumindest eine andere Steuereinheit steuerbar sind, und dem drahtlosen Gerät steuert.

12. Ein Computerprogrammprodukt mit einem Programmcode, der Anweisungen aufweist, die, wenn sie durch einen Computer oder einen Mikroprozessor ausgeführt werden, bewirken, dass der Computer oder der Mikroprozessor alle Schritte des Verfahrens gemäß Anspruch 11 durchführt.

## Revendications

1. Appareil permettant de déterminer une unité de contrôle parmi une pluralité d'unités de contrôle dans un système de communication sans fil afin de contrôler, par l'unité de contrôle, une transmission coopérative ou une réception coopérative entre les stations de base et un dispositif sans fil, dans lequel le système de communication sans fil comprend un réseau central de collecte avec une pluralité d'unités de contrôle, et comprend une pluralité de stations de base, dans lequel chaque unité de contrôle est configurée pour contrôler une ou plusieurs stations de base dans une transmission coopérative ou une réception coopérative entre les stations de base et un dispositif sans fil, les une ou plusieurs stations de base étant configurées pour desservir un dispositif sans fil, l'appareil comprenant:
un déterminateur de paquets de liaisons filaires configuré pour déterminer (501) si un paquet de liaisons filaires de stations de base pouvant être contrôlées par l'unité de contrôle qui contrôle la station de base desservante contient ou non un paquet de liaisons sans fil désiré de stations de base, le paquet de liaisons filaires de stations de base étant déterminé en tenant compte d'une propriété du réseau central de collecte, où toutes les stations de base présentant un canal radio utile vers le dispositif sans fil constituent le paquet de liaisons sans fil désiré de stations de base;
un processeur de faisabilité du paquet (400) configuré pour envoyer (502, 701), quand un paquet de liaisons filaires de stations de base ne contient pas le paquet de liaisons sans fil désiré de stations de base, une requête de paquets de liaisons filaires faisables à au moins une unité de contrôle autre que l'unité de contrôle qui contrôle la station de base desservante qui dessert le dispositif sans fil, et configuré pour recevoir (702) une réponse de faisabilité de paquet de l'au moins une autre unité de contrôle lorsque le paquet de liaisons filaires de stations de base ne contient pas le paquet de liaisons sans fil désiré de stations de base, la réponse de faisabilité de paquet contenant une information sur un paquet de liaisons filaires faisable de stations de base pouvant être contrôlées par l'au moins une autre unité de contrôle en réponse à la requête de faisabilité à l'au moins une autre unité de contrôle, où le paquet de liaisons filaires faisable de stations de base pouvant être contrôlées par l'au moins une autre unité de contrôle a été obtenu en tenant compte d'une propriété du réseau central de collecte; et
un sélecteur d'unité de contrôle (403) configuré pour sélectionner (505), lorsque le paquet de liaisons filaires de stations de base ne contient pas le paquet de liaisons sans fil désiré de stations de base, l'au moins une autre unité de contrôle si l'information sur le paquet de liaisons filaires faisable de stations de base pouvant être contrôlées par l'au moins une autre unité de contrôle contenue dans la réponse de faisabilité de paquet remplit un critère de sélection de sorte que l'au moins une autre unité de contrôle réalise le contrôle d'une transmission coopérative ou d'une réception coopérative entre les stations de base du paquet de liaisons filaire faisable de stations de base pouvant être contrôlées par l'au moins une autre unité de contrôle et le dispositif sans fil.

2. Appareil selon la revendication 1, dans lequel le sélecteur d'unité de contrôle est configuré pour sélectionner une première autre unité de contrôle pour contrôler une transmission coopérative ou une réception coopérative entre au moins deux stations de base et un premier dispositif sans fil et pour sélectionner une deuxième autre unité de contrôle pour contrôler une transmission coopérative ou une réception coopérative entre au moins deux stations de base et un deuxième dispositif sans fil si l'information sur le paquet de liaisons filaires faisable de stations de base pouvant être contrôlées par la première autre unité de contrôle remplit le critère de sélection pour le premier dispositif sans fil et l'information sur le paquet de liaisons filaires faisable de stations de base pouvant être contrôlées par la deuxième autre unité de contrôle remplit le critère de sélection pour le deuxième dispositif sans fil.

3. Appareil selon la revendication 1 ou 2, dans lequel le critère de sélection est rempli si le paquet de liaisons filaires faisable de stations de base pouvant être contrôlées par l'au moins une autre unité de contrôle contient plus de stations de base d'un paquet de liaisons sans fil désiré de stations de base qu'un seuil de sélection, contient plus de stations de base d'un paquet de liaisons sans fil désiré de stations de base qu'un paquet de liaisons filaires de stations de base pouvant être contrôlées par l'unité de contrôle qui contrôle la station de base desservante ou contient plus de stations de base d'un paquet de liaisons sans fil désiré de stations de base que tous les paquets de liaisons filaires faisables connus du fait de l'information sur des paquets de liaisons filaires faisables et qu'un paquet de liaisons filaires de stations de base pouvant être contrôlées par l'unité de contrôle qui contrôle la station de base desservante.

4. Appareil selon l'une des revendications 1 à 3, dans lequel le sélecteur d'unité de contrôle est configuré pour sélectionner l'au moins une unité de contrôle sur base d'une comparaison entre une information sur un paquet de liaisons filaires de stations de base pouvant être contrôlées par l'unité de contrôle qui contrôle la station de base desservante et l'au moins une information sur le paquet de liaisons filaires faisable de stations de base pouvant être contrôlées par l'au moins une autre unité de contrôle.

5. Appareil selon l'une des revendications 1 à 4, dans lequel le processeur de faisabilité du paquet est configuré pour envoyer une requête de paquets de liaisons filaires faisables à toutes les unités de contrôle qui contrôlent une station de base contenue dans un paquet de liaisons sans fil désiré.

6. Appareil selon la revendication 1, dans lequel la propriété du réseau central de collecte est un temps de latence admissible maximum entre une station de base d'un paquet de liaisons filaires et l'unité de contrôle du paquet de liaisons filaires ou une capacité d'une liaison filaire entre les stations de base du paquet de liaisons filaires ou une station de base du paquet de liaisons filaires et l'unité de contrôle du paquet de liaisons filaires.

7. Appareil selon l'une des revendications 1 à 6, dans lequel le sélecteur d'unité de contrôle est configuré pour déclencher une transmission coopérative ou une réception coopérative entre au moins deux stations de base et le dispositif sans fil contrôlé par l'unité de contrôle sélectionnée.

8. Appareil selon l'une des revendications 1 à 7, dans lequel l'au moins une information sur le paquet de liaisons filaires faisable de stations de base pouvant être contrôlées par l'au moins une autre unité de contrôle représente un ensemble de stations de base contenues dans le paquet de liaisons filaires faisable, représente un ensemble de stations de base contenues dans le paquet de liaisons filaires faisable ainsi que contenues dans un paquet de liaisons sans fil désiré de stations de base ou représente une information indiquant si le paquet de liaisons filaires faisable contient ou non entièrement un paquet de liaisons sans fil désiré de stations de base.

9. Appareil selon l'une des revendications 1 à 8, dans lequel le sélecteur d'unité de contrôle est configuré pour déclencher une commutation du dispositif sans fil de la station de base desservant actuellement à une station de base contrôlée par l'unité de contrôle sélectionnée.

10. Système de communication sans fil avec un réseau central de collecte avec une pluralité d'unités de contrôle et une pluralité de stations de base, dans lequel chaque unité de contrôle est à même de contrôler une ou plusieurs stations de base, le système de communication sans fil comprenant:
un appareil destiné à déterminer une unité de contrôle parmi une pluralité d'unités de contrôle dans un système de communication sans fil pour contrôler une transmission coopérative ou une réception coopérative entre les stations de base et un dispositif sans fil selon l'une des revendications 1 à 9; et
l'au moins une autre unité de contrôle configurée pour contrôler une transmission coopérative ou une réception coopérative entre les au moins deux stations de base et le dispositif sans fil.

11. Procédé permettant de déterminer une unité de contrôle parmi une pluralité d'unités de contrôle dans un système de communication sans fil afin de contrôler, par l'unité de contrôle, une transmission coopérative ou une réception coopérative entre les stations de base et un dispositif sans fil, dans lequel le système de communication sans fil comprend un réseau central de collecte avec une pluralité d'unités de contrôle, et comprend une pluralité de stations de base, dans lequel chaque unité de contrôle est configurée pour contrôler une ou plusieurs stations de base dans une transmission coopérative ou une réception coopérative entre les stations de base et un dispositif sans fil, les une ou plusieurs stations de base étant configurées pour desservir un dispositif sans fil, le procédé comprenant le fait de:
déterminer (501) si un paquet de liaisons filaires de stations de base pouvant être contrôlées par l'unité de contrôle qui contrôle la station de base desservante contient ou non un paquet de liaisons sans fil désiré de stations de base, le paquet de liaisons filaires de stations de base étant déterminé en tenant compte d'une propriété du réseau central de collecte, où toutes les stations de base présentant un canal radio utile pour le dispositif sans fil constituent le paquet de liaisons sans fil désiré de stations de base;
envoyer (502, 701), quand un paquet de liaisons filaires de stations de base ne contient pas le paquet de liaisons sans fil désiré de stations de base, une requête de paquets de liaisons filaires faisable à au moins une unité de contrôle autre que l'unité de contrôle qui contrôle la station de base desservant qui dessert le dispositif sans fil;
recevoir (400, 702) une réponse de faisabilité de paquet de l'au moins une autre unité de contrôle lorsque le paquet de liaisons filaires de stations de base ne contient pas le paquet de liaisons sans fil désiré de stations de base, , la réponse de faisabilité de paquet contenant une information sur un paquet de liaisons filaires faisable de stations de base pouvant être contrôlées par l'au moins une autre unité de contrôle en réponse à la requête de faisabilité à l'au moins une autre unité de contrôle, où le paquet de liaisons filaires faisable de stations de base pouvant être contrôlées par l'au moins un autre unité de contrôle a été obtenu en tenant compte d'une propriété du réseau central de collecte; et
sélectionner (403, 505), lorsque le paquet de liaisons filaires de stations de base ne contient pas le paquet de liaisons sans fil désiré de stations de base, l'au moins une autre unité de contrôle si l'information sur le paquet de liaisons filaires faisable de stations de base pouvant être contrôlées par l'au moins une autre unité de contrôle contenue dans la réponse de faisabilité de paquet remplit un critère de sélection de sorte que l'au moins une autre unité de contrôle réalise le contrôle d'une transmission coopérative ou d'une réception coopérative entre les stations de base du paquet de liaisons filaires faisable de stations de base pouvant être contrôlées par l'au moins une autre unité de contrôle et le dispositif sans fil.

12. Programme d'ordinateur avec un code de programme comprenant des instructions qui, lorsqu'elles sont exécutées par un ordinateur ou un microprocesseur, font que l'ordinateur ou le microprocesseur exécute toutes les étapes du procédé selon la revendication 11.
